# EUROPÄISCHE PATENTSCHRIFT

(11) **EP 2 752 318 B1**
(45) Veröffentlichungstag und Bekanntmachung des Hinweises auf die Patenterteilung: **09.05.2018**
(21) Anmeldenummer: 13170883.6
(22) Anmeldetag: 06.06.2013
(51) Int. Cl.: B60H 1/28, B62D 25/08

(54) **Kraftfahrzeug mit einem Wasserkasten**
Motor vehicle with a water box
Véhicule automobile doté d'un boîte a eau

(43) Veröffentlichungstag der Anmeldung: 09.07.2014
(73) Patentinhaber: WEIDPLAS GmbH, 8700 Küsnacht (CH); EMPA Eidgenössische Materialprüfungs- und Forschungsanstalt, 8600 Dübendorf (CH)
(72) Erfinder: Bölsterli, Christian, 8635 Dürnten (CH); Dal Vecchio, Piero, 8734 Ermenswil (CH); Harke, Stefan, 74889 Sinsheim (DE); Müller, Armin, 8722 Kaltbrunn (CH); Weilenmann, Martin, 8330 Pfäffikon (CH)
(74) Vertreter: Rutz, Andrea

(56) Entgegenhaltungen:
- EP-A1- 2 594 462
- DE-A1-102010 053 471
- DE-C1- 4 234 045

## Beschreibung

### TECHNISCHES GEBIET

Die vorliegende Erfindung betrifft ein Kraftfahrzeug mit einem Wasserkasten, einen Wasserkasten sowie ein Verfahren zur Regelung eines Luftdrucks und/oder einer Luftmenge an einer Luftauslassöffnung eines Wasserkastens.

### STAND DER TECHNIK

Zur Erwärmung bzw. Kühlung der Luft im Fahrgastinnenraum wird bei Kraftfahrzeugen üblicherweise mittels eines Klimageräts Frischluft von aussen her angesaugt und dem Fahrgastinnenraum zugeführt. Ein Klimagerät weist zumindest einen Verdampfer und/oder einen Heizer auf, mit welchem die Frischluft auf eine erwünschte Temperatur abgekühlt bzw. erwärmt werden kann. Zum Ansaugen der Luft kann es zudem ein Luftfördermittel, wie insbesondere einen Ventilator, mitumfassen.

Damit dem Klimagerät möglichst trockene und tropfenarme Frischluft zur Verfügung gestellt werden kann, ist in Kraftfahrzeugen meist ein Wasserkasten vorgesehen, wie er beispielsweise aus der EP 2 236 332 bekannt ist. Die Aufgabe des Wasserkastens besteht darin, Wasser aus der angesaugten Frischluft abzuscheiden, sodass möglichst wenig Wassertropfen in das Klimagerät gelangen. Wasser kann insbesondere bei Regen in Form von Schwallwasser oder in Form von Tröpfchen in der angesaugten Frischluft enthalten sein. Durch das Vorsehen eines Wasserkastens soll ein Absetzen von Wassertropfen im Luftfilter des Klimageräts, was einen unerwünschten Pilzbefall zur Folge haben kann, verhindert werden.

Um die Wasserabscheidung im Wasserkasten zu fördern, ist im Innenraum von Wasserkästen oft ein Umlenkelement angeordnet, welches von der einströmenden Luft umströmt werden muss. Ein derartiger Wasserkasten ist beispielsweise in der DE 197 56 983 C1 offenbart.

Der Energieverbrauch des Luftfördermittels des Klimageräts ist insbesondere abhängig vom Strömungswiderstand, den die durch den Wasserkasten hindurchströmende Luft im Wasserkasten erfährt. Dieser Strömungswiderstand wird insbesondere durch das im Innenraum des Wasserkastens angeordnete Umlenkelement zur Abscheidung von Wasser bewirkt.

In der nachveröffentlichten EP 2 660 084 A1 wird die Idee angegeben, Abluft aus dem Fahrgastinnenraum an einem als Wärmetauscher ausgebildeten Wasserkasten vorbeizuführen, um dadurch die den Wasserkasten durchströmende Frischluft vorzutemperieren. Um einen möglichst effizienten Wärmeübergang zu erzielen, sollte die Oberfläche der als Wärmetauschelement dienenden Wasserkastenwandung möglichst gross sein. Eine grosse Oberfläche bewirkt jedoch Reibungseffekte und entsprechend einen Druckverlust in Bezug auf die den Wasserkasten durchströmende Luft.

Die Automobilindustrie hat Vorgaben erlassen, die den maximalen Druckabfall spezifizieren, welche die den Wasserkasten durchströmende Luft erfahren darf. Der maximale Druckabfall bei einem Wasserkasten wird üblicherweise dann erreicht, wenn das Luftfördermittel des Klimageräts mit seiner Maximalleistung betrieben wird und entsprechend eine grosse Luftmenge ansaugt.

Die DE 42 34 045 C1 sowie die DE 10 2010 053 471 A1 offenbaren jeweils eine Luftzuführvorrichtung gemäß Oberbegriff der Ansprüche 1 und 11 für ein Kraftfahrzeug, bei welcher mittels einer Klappensteuerung eine zusätzliche Frischlufteinlassöffnung geöffnet werden kann, so dass bei Bedarf Frischluft aus zwei verschiedenen Frischlufteinlassöffnungen ansaugbar ist.

### DARSTELLUNG DER ERFINDUNG

Es ist also eine Aufgabe der vorliegenden Erfindung, ein Kraftfahrzeug mit einem Wasserkasten bereitzustellen, welcher in seinem Inneren zwar eine druckverlustbehaftete Struktur aufweist, aber auch beim Ansaugen von grossen Luftmengen noch einen verhältnismässig geringen Druckabfall aufweist. Zur Lösung dieser Aufgabe wird ein Kraftfahrzeug vorgeschlagen, wie es in Anspruch 2 angegeben ist. Erfindungsgemäß wird in Anspruch 1 ein Wasserkasten für ein Kraftfahrzeug angegeben sowie in Anspruch 12 ein Verfahren zur Regelung eines Luftdrucks und/oder einer Luftmenge an einer Luftauslassöffnung eines Wasserkastens. Vorteilhafte Ausgestaltungen der Erfindung sind in den abhängigen Ansprüchen angegeben.

Die vorliegende Erfindung stellt also ein Kraftfahrzeug mit einem Fahrgastinnenraum sowie mit einem Wasserkasten zur Verfügung, der Wasserkasten aufweisend
eine Innenwandung, welche einen Innenraum begrenzt,
zumindest eine erste Frischlufteinlassöffnung, um Frischluft von ausserhalb des Fahrgastinnenraums, insbesondere von ausserhalb des Kraftfahrzugs, in den Innenraum einströmen zu lassen,
zumindest eine Luftauslassöffnung, um Luft aus dem Innenraum ausströmen zu lassen,
zumindest eine erste Wasseraustrittsöffnung, welche zum Abführen von Wasser aus dem Innenraum dient,
wenigstens eine im Innenraum angeordnete druckverlustbehaftete Struktur, welche einen Druckverlust zwischen der ersten Frischlufteinlassöffnung und der Luftauslassöffnung in Bezug auf die den Innenraum hindurchströmenden Luft bewirkt, sowie
zumindest eine zweite Frischlufteinlassöffnung, um Frischluft von ausserhalb des Fahrgastinnenraums, insbesondere von ausserhalb des Kraftfahrzeugs, in den Innenraum einströmen zu lassen, wobei die zweite Frischlufteinlassöffnung luftstromabwärts von der wenigstens einen druckverlustbehafteten Struktur, bzw. zwischen der wenigstens einen druckverlustbehafteten Struktur und der zumindest einen Luftauslassöffnung, angeordnet ist.

Dadurch, dass der Wasserkasten des Kraftfahrzeugs zumindest eine zweite Frischlufteinlassöffnung aufweist, kann in Bezug auf die den Wasserkasten durchströmende Luft auch dann noch ein verhältnismässig kleiner Druckabfall und somit ein geringer Energieverbrauch eines allfälligen Luftfördermittels gewährleistet werden, wenn die durch den Wasserkasten angesogene Luftmenge gross ist. Aufgrund der zusätzlichen, durch die zweite Frischlufteinlassöffnung in den Innenraum einströmenden Luft, welche von der druckverlustbehafteten Struktur im Innenraum kaum oder gar nicht beeinflusst wird, ist der Luftdruck im Bereich der Luftauslassöffnung erhöht im Vergleich zur Situation mit nur einer einzigen Frischlufteinlassöffnung oder im Vergleich zur Situation mit mehreren Frischlufteinlassöffnungen, welche jedoch alle luftstromaufwärts von der druckverlustbehafteten Struktur angeordnet sind.

Der Innenraum des Wasserkastens ist vorteilhaft mit Ausnahme der Frischlufteinlassöffnungen, der zumindest einen Luftauslassöffnung und der zumindest einen Wasseraustrittsöffnung vollständig nach aussen hin verschlossen. Um Frischluft von ausserhalb des Kraftfahrzeugs in den Innenraum einströmen zu lassen, münden die zumindest eine erste und die zumindest eine zweite Frischlufteinlassöffnung in der Regel direkt auf einer Aussenseite des Kraftfahrzeugs nach aussen hin, oder sie münden in eine Leitung oder in einen Raum, wie insbesondere den Motorraum, welche ihrerseits eine Verbindung nach aussen hin aufweisen, so dass Frischluft durch die Frischlufteinlassöffnungen einströmen kann.

Während die zumindest eine erste Frischlufteinlassöffnung sowie die zumindest eine Luftauslassöffnung üblicherweise in Bezug auf die Schwerkraftrichtung in einem oberen Bereich des Wasserkastens angeordnet sind, ist die zumindest eine Wasseraustrittsöffnung vorteilhaft in einem unteren Bereich des Wasserkastens und insbesondere unmittelbar angrenzend an den untersten Punkt des Innenraums angeordnet. Die Wasserabscheidung im Wasserkasten kann dadurch optimiert werden.

Bevorzugt weist das Kraftfahrzeug eine Regelungsvorrichtung zum Regeln der durch die zweite Frischlufteinlassöffnung in den Innenraum einströmenden Frischluftmenge auf. Mittels dieser Regelungsvorrichtung kann die zweite Frischlufteinlassöffnung insbesondere vollständig freigegeben und/oder vollständig verschlossen werden. Im Falle, dass die durch die Luftauslassöffnung angesogene Luftmenge verhältnismässig klein ist, kann die zweite Frischlufteinlassöffnung verschlossen sein, da dann der im Wasserkasten entstehende Druckabfall trotz der Anwesenheit der zumindest einen druckverlustbehaftenen Struktur klein ist und die entsprechenden von der Automobilindustrie erlassenen Vorgaben problemlos eingehalten werden können. Bei Erhöhen der durch den Wasserkasten angesogenen Luftmenge kann dann, zum Beispiel bei Überschreiten einer gewissen durch die Luftauslassöffnung angesogenen Luftmenge, die zweite Frischlufteinlassöffnung mittels der Regelungsvorrichtung teilweise oder vollständig freigegeben werden, so dass zusätzliche Frischluft von aussen her in den Innenraum des Wasserkastens einströmt. Da die zweite Frischlufteinlassöffnung luftstromabwärts von der wenigstens einen druckverlustbehafteten Struktur angeordnet ist, wird diese zusätzlich in den Innenraum einströmende Frischluft vom Strömungswiderstand der druckverlustbehafteten Struktur nicht beeinflusst und erfährt im Wasserkasten somit in der Regel einen viel geringeren Druckverlust als die durch die zumindest eine erste Frischlufteinlassöffnung einströmende Frischluft. Ein insgesamt verhältnismässig geringer Druckabfall kann daher weiterhin gewährleistet werden, so dass an der Luftauslassöffnung ein ausreichender Druck bereitgestellt werden kann.

Das Kraftfahrzeug weist in der Regel ein Klimagerät mit zumindest einem Luftfördermittel, wie insbesondere einem Ventilator auf, mittels welchem Luft aus dem Innenraum durch die Luftauslassöffnung hindurch ansaugbar ist. Die Luftauslassöffnung mündet üblicherweise direkt oder via eine Verbindungsleitung in das Klimagerät, welches in der Regel im Fahrgastinnenraum angeordnet ist. Im Klimagerät ist üblicherweise eine Heiz- und/oder Kühlvorrichtung, wie insbesondere ein Verdampfer, vorgesehen, mittels welcher die angesogene Luft gekühlt bzw. gewärmt werden kann, bevor sie dem Fahrgastinnenraum zugeführt wird.

Vorteilhaft umfasst die Regelungsvorrichtung eine Klappe. Diese ist üblicherweise schwenkbar im Bereich der Luftauslassöffnung an der Innenwandung des Wasserkastens angebracht. Dadurch ist die durch die zweite Lufteinlassöffnung in den Innenraum einströmende Luftmenge auf besonders einfache Art und Weise regelbar.

Vorteilhaft ist die Regelungsvorrichtung derart konfiguriert, dass die durch die zweite Frischlufteinlassöffnung in den Innenraum einströmende Luftmenge in Abhängigkeit einer aktuellen Förderleistung, mittels welcher Luft beispielsweise mittels eines in einem Klimagerät angeordneten Luftfördermittels durch die Luftauslassöffnung angesogen wird, geregelt wird. Die Regelungsvorrichtung kann insbesondere derart konfiguriert sein, dass die zweite Frischlufteinlassöffnung bei Überschreiten einer bestimmten Förderleistung des Luftfördermittels automatisch geöffnet und entsprechend bei Unterschreiten dieser Förderleistung geschlossen wird. Alternativ kann die Regelungsvorrichtung eine Messeinheit umfassen zum Messen des im Bereich der Luftauslassöffnung oder in einem Bereich luftstromabwärts zur Luftauslassöffnung vorliegenden Luftdrucks und/oder Luftmenge. Die Messeinheit kann mit einer Rechnereinheit der Regelungsvorrichtung verbunden sein, welche zum Beispiel den Öffnungswinkel einer im Bereich der zweiten Lufteinlassöffnung angeordneten Klappe in Abhängigkeit des von der Messeinheit gemessenen Wertes vorgibt.

Der Innenraum des Wasserkastens erstreckt sich in der Regel von der ersten Frischlufteinlassöffnung bis zur Luftauslassöffnung, das heisst die erste Frischlufteinlassöffnung und die Luftauslassöffnung münden direkt in den Innenraum. Gemäss einer Weiterbildung der Erfindung ist der Innenraum derart in einen ersten Teilbereich und einen zweiten Teilbereich unterteilt, dass der erste Teilbereich in Bezug auf die von der ersten Frischlufteinlassöffnung durch den Innenraum hindurch zur Luftauslassöffnung strömende Luft einen grösseren Druckverlust bewirkt als der zweite Teilbereich und relativ zum zweiten Teilbereich luftstromaufwärts angeordnet ist. Die zweite Frischlufteinlassöffnung ist dann bevorzugt in einem den zweiten Teilbereich begrenzenden Bereich der Innenwandung angeordnet, das heisst die zweite Frischlufteinlassöffnung mündet direkt in den zweiten Teilbereich des Innenraums. Indem die zweite Frischlufteinlassöffnung angrenzend an den zweiten Teilbereich angeordnet ist, erfährt die durch die zweite Frischlufteinlassöffnung einströmende Frischluft im Innenraum einen verhältnismässig geringen Druckverlust.

Bei der druckverlustbehafteten Struktur handelt es sich bevorzugt um ein Umströmungsorgan, welches üblicherweise an der Innenwandung angebracht ist und von dieser aus weit in den Innenraum hineinragt. Die druckverlustbehaftete Struktur stellt insbesondere für den von der ersten Frischlufteinlassöffnung zur Luftauslassöffnung strömenden Luftstrom ein Hindernis dar, welches in Bezug auf den Luftstrom eine Umlenkung, Aufteilung und/oder Verwirbelung bewirkt. Aufgrund dieser druckverlustbehafteten Struktur ist insbesondere im Fall, dass grosse Luftmengen den Innenraum von der ersten Frischlufteinlassöffnung zur Luftauslassöffnung durchströmen, ein deutlicher Druckverlust zwischen der ersten Frischlufteinlassöffnung und der Luftauslassöffnung registrierbar.

Gemäss einer bevorzugten Ausführungsform ist die druckverlustbehaftete Struktur als ein Umlenkelement ausgebildet, welches zum Abscheiden von Wasser aus der den Innenraum durchströmenden Luft dient.

Gemäss einer weiteren bevorzugten Ausführungsform ist die druckverlustbehaftete Struktur als ein Wärmetauschelement ausgebildet, welches dazu dient, thermische Energie von Abluft in den Innenraum zu übertragen. Das Kraftfahrzeug weist in diesem Fall zumindest eine Leitstruktur auf, welche dazu dient, Abluft gezielt zum Wärmetauschelement hin zu leiten. Bei der Abluft kann es sich insbesondere um Luft handeln, welche aus dem Fahrgastinnenraum und/oder dem Motorraum stammt. Durch das Hinleiten von Abluft zum Wärmetauschelement kann die den Innenraum durchströmende Luft vortemperiert werden.

Vorteilhaft weist der Wasserkasten sogar eine Vielzahl von in den Innenraum hineinragenden Umströmungsorganen auf, welche an der den Innenraum begrenzenden Innenwandung angebracht sind. Diese Umströmungsorgane sind dabei insbesondere jeweils hohl ausgebildet, um von Abluft durchströmt zu werden. Die Wasserabscheidung und/oder Wärmeübertragung kann durch das Vorsehen einer Vielzahl von Umströmungsorganen wesentlich verbessert werden.

Die den Innenraum begrenzende Innenwandung weist vorteilhaft eine zum Innenraum hin gewandte Innenseite mit einer Oberflächenstruktur auf, welche im Vergleich zu einer glatten Oberfläche eine erhebliche Oberflächenvergrösserung, bevorzugt zumindest eine Verdoppelung und noch bevorzugter zumindest eine Verdreifachung der Oberfläche, bewirkt. Die Oberflächenstruktur kann beispielsweise eine gerillte oder gewellte Form haben oder Rippen aufweisen. Das Vorsehen einer derartigen Oberflächenstruktur bewirkt eine verbesserte Wasserabscheidung und/oder Wärmeübertragung. Bei der hierbei genannten glatten Oberfläche handelt es sich bevorzugt um eine Oberfläche, die eine Oberflächenrauheit Ra von 2 Mikrometer aufweist, wobei diese Oberflächenrauheit Ra nach der Norm DIN EN ISO 3274 (Ausgabe vom 1.4.1998) gemessen ist.

Der Wasserkasten weist ausserdem eine
Aussenwandung auf, die einen den Innenraum zumindest teilweise umgebenden Hohlraum begrenzt, wobei in der Aussenwandung zumindest eine Lufteintrittsöffnung, durch welche hindurch Luft in den Hohlraum einströmen kann, sowie zumindest eine zweite Wasseraustrittsöffnung vorhanden ist, welche zum Abführen von Wasser aus dem Hohlraum ausgebildet ist, und wobei die zweite Frischlufteinlassöffnung den Innenraum und den Hohlraum derart miteinander verbindet, dass durch die zweite Frischlufteinlassöffnung hindurch Luft aus dem Hohlraum in den Innenraum strömen kann. Mit anderen Worten ist bei dieser bevorzugten Ausführungsform ein erster, kleinerer Wasserkasten im Inneren eines zweiten, grösseren Wasserkastens angeordnet. Der grössere Wasserkasten sorgt insbesondere dafür, dass die durch die zweite Frischlufteinlassöffnung in den Innenraum des kleineren Wasserkastens einströmende Luft bereits von Schwallwasser befreit ist. Das Kraftfahrzeug weist entsprechend zumindest ein im Hohlraum angeordnetes Umlenkelement auf, welches zum Abscheiden von Wasser aus der den Hohlraum durchströmenden Luft dient. Der kleinere, innere Wasserkasten und/oder der grössere, äussere Wasserkasten können als Wärmetauscher ausgebildet sein und zumindest ein Wärmetauschelement sowie eine Leitstruktur zum gezielten Hinleiten von Abluft zum Wärmetauschelement hin aufweisen, um die durch den Innenraum und/oder die durch den Hohlraum strömende Luft vorzutemperieren.

Um den Druckabfall in Bezug auf die durch die zweite Frischlufteinlassöffnung einströmende Luft möglichst gering zu halten, ist die zweite Frischlufteinlassöffnung derart angeordnet, dass die Luft beim Einströmen in den Innenraum durch die zweite Frischlufteinlassöffnung hindurch im Wesentlichen in Richtung zur Luftauslassöffnung hin strömt.

Der Wasserkasten kann eine Luftauslassleitung mitumfassen, welche in die Luftauslassöffnung mündet, wobei die zweite Frischlufteinlassöffnung dann bevorzugt innerhalb dieser Luftauslassleitung angeordnet ist. Des Weiteren kann der Wasserkasten eine Lufteinlassleitung mitumfassen, in welche die erste Frischlufteinlassöffnung mündet. Die Lufteinlass- und/oder die Luftauslassleitung sind insbesondere rohrförmig ausgebildet.

Es wird ausserdem ein Wasserkasten für ein Kraftfahrzeug angegeben. Der Wasserkasten ist insbesondere gemäss einer der beschriebenen Varianten bzw. Ausführungsformen des Wasserkastens des oben erläuterten Kraftfahrzugs ausgebildet, und weist auf:
eine Innenwandung, welche einen Innenraum begrenzt,
zumindest eine erste Frischlufteinlassöffnung, um Frischluft in den Innenraum einströmen zu lassen,
zumindest eine Luftauslassöffnung, um Luft aus dem Innenraum ausströmen zu lassen,
zumindest eine erste Wasseraustrittsöffnung, welche zum Abführen von Wasser aus dem Innenraum dient,
wenigstens eine im Innenraum angeordnete druckverlustbehaftete Struktur, welche einen Druckverlust zwischen der ersten Frischlufteinlassöffnung und der Luftauslassöffnung in Bezug auf die den Innenraum hindurchströmenden Luft bewirkt, sowie
zumindest eine zweite Frischlufteinlassöffnung, um Frischluft in den Innenraum einströmen zu lassen, wobei die zweite Frischlufteinlassöffnung luftstromabwärts von der wenigstens einen druckverlustbehaftete Struktur angeordnet ist.

Des Weiteren wird ein Verfahren zur Regelung eines Luftdrucks und/oder einer Luftmenge an einer Luftauslassöffnung des Wasserkastens eines Kraftfahrzeugs angegeben. Das Kraftfahrzeug und im Speziellen der Wasserkasten ist insbesondere wie oben beschrieben ausgebildet. Der Wasserkasten weist eine erste und eine zweite Frischlufteinlassöffnung sowie eine Luftauslassöffnung auf, welche via einen Innenraum miteinander verbunden sind, und das Verfahren weist zumindest den Schritt auf, dass die durch die zweite Frischlufteinlassöffnung in den Innenraum einströmende Luftmenge mittels einer Regelungsvorrichtung in Abhängigkeit eines Luftdrucks und/oder einer Luftmenge geregelt wird, welcher/welche luftstromabwärts zur Luftauslassöffnung und/oder im Bereich der Luftauslassöffnung vorliegt.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: schematisch eine Vorderansicht eines Kraftfahrzeugs mit einem Wasserkasten gemäss einer ersten erfindungsgemässen Ausführungsform;
- Fig. 2: schematisch eine zentrale Schnittansicht eines Wasserkastens für ein Kraftfahrzeug gemäss einer zweiten Ausführungsform;
- Fig. 3: schematisch eine zentrale Schnittansicht eines Wasserkastens für ein Kraftfahrzeug gemäss einer dritten Ausführungsform;
- Fig. 4: schematisch eine zentrale Schnittansicht eines Wasserkastens für ein Kraftfahrzeug gemäss einer vierten Ausführungsform; sowie
- Fig. 5: schematisch eine zentrale Schnittansicht eines Wasserkastens für ein Kraftfahrzeug gemäss einer fünften Ausführungsform.

### BESCHREIBUNG BEVORZUGTER AUSFÜHRUNGSFORMEN

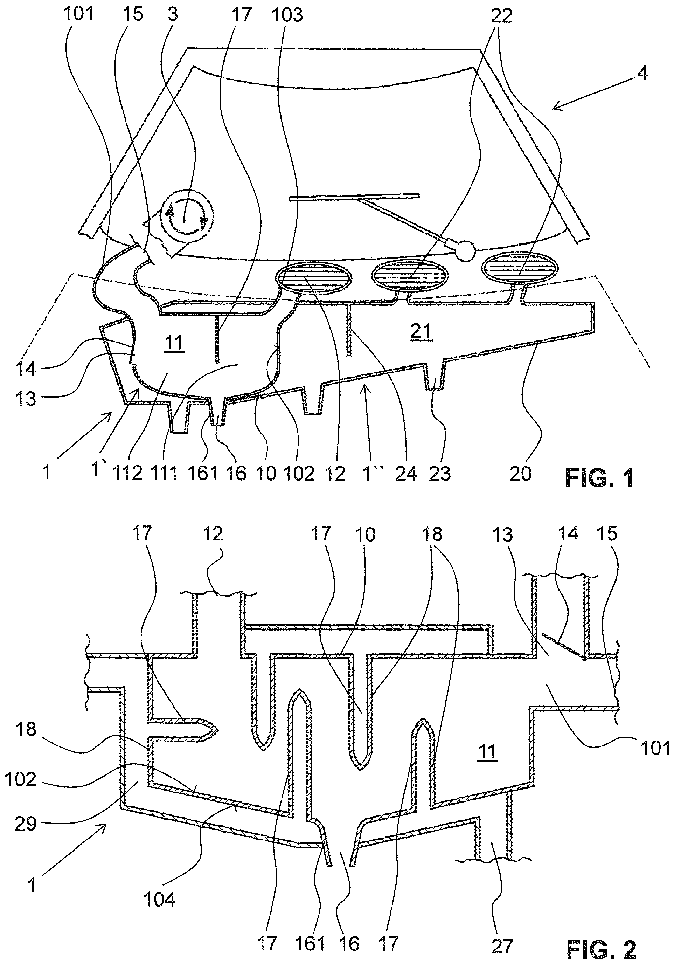

In den Figuren 1 bis 5 sind Wasserkästen für ein Kraftfahrzeug gemäss unterschiedlichen Ausführungsformen gezeigt. Bei den in den Figuren 1 bis 5 gezeigten Ausführungsformen sind gleiche, ähnliche oder ähnlich wirkende Merkmale jeweils mit den gleichen Bezugszeichen versehen.

Die Figur 1 zeigt schematisch die Ansicht eines Kraftfahrzeugs, hier eines Automobils, von vorne, wobei ein Wasserkasten 1, welcher unterhalb einer mit gestrichelten Linien angedeuteten Motorhaube angeordnet ist, erkennbar ist. Der Wasserkasten 1 gemäss dieser ersten Ausführungsform; weist einen inneren Wasserkasten 1' und einen äusseren Wasserkasten 1" auf.

Der äussere Wasserkasten 1" weist eine Aussenwandung 20 auf, welche einen Hohlraum 21 begrenzt. Innerhalb der Aussenwandung 20 ist zumindest eine Lufteintrittsöffnung 22 ausgebildet, im vorliegenden Fall sind es sogar zwei, um Frischluft von ausserhalb des Fahrzeuges 4 in den Hohlraum 21 einströmen zu lassen. Die beiden Lufteintrittsöffnungen 22 münden im vorliegenden Ausführungsbeispiel im Bereich zwischen der Motorhaube und der Frontscheibe des Kraftfahrzeugs 4 nach aussen hin. Sie sind in ihren Mündungsbereichen jeweils mit einem Gitter versehen, um das Eindringen von Schmutz und insbesondere von festen Bestandteilen im Schwallwasser, wie insbesondere Laub und Schnee, in den Hohlraum 21 zu verhindern.

In dem in Bezug auf die Schwerkraftrichtung unten angeordneten Bodenbereich der Aussenwandung 20 ist zumindest eine Wasseraustrittsöffnung 23 ausgebildet, welche zum Abführen von Wasser aus dem Hohlraum 21 nach aussen hin dient. Im vorliegenden Ausführungsbeispiel sind drei derartige Wasseraustrittsöffnungen 23 vorgesehen, wobei eine davon an dem in Bezug auf die Schwerkraftrichtung zuunterst angeordneten Punkt des Hohlraums 21 angeordnet ist, sodass sämtliches im Hohlraum 21 vorhandenes Wasser nach aussen hin abfliessen kann.

Im Bereich des als obere Deckfläche ausgebildeten Teils der Aussenwandung 20 ist ein Umlenkelement 24 angebracht, welches im Wesentlichen entlang der Schwerkraftrichtung von oben nach unten hin weit in den Hohlraum 21 hineinragt, sodass es von der durch die Lufteintrittsöffnungen 22 in den Hohlraum 21 einströmenden Frischluft in vertikaler Richtung und bevorzugt auch in horizontaler Richtung umströmt werden muss. Das Umlenkelement 24 dient dadurch zum Abscheiden von Wasser aus der den Hohlraum 21 durchströmenden Luft. Das Umlenkelement 24 ist insbesondere derart im Hohlraum 21 angeordnet, dass es von sämtlichen durch die unterschiedlichen Lufteintrittsöffnungen 22 einströmenden Luftströmen umströmt werden muss.

Der äussere Wasserkasten 1" des vorliegenden Ausführungsbeispiels erstreckt sich über einen Grossteil der Breite des Motorenraums des Kraftfahrzeugs 4. Der äussere Wasserkasten 1" ist dabei derart ausgestaltet, dass der Hohlraum 21 im Bereich der Lufteintrittsöffnungen 22 seine geringste Höhe aufweist und von dort aus in Richtung zu der zuunterst angeordneten Wasseraustrittsöffnung 23 kontinuierlich an Höhe zunimmt. Im Bereich oberhalb derjenigen Wasseraustrittsöffnung 23, welche bezogen auf die Schwerkraftrichtung zuunterst angeordnet ist, ist im Hohlraum 21 ein innerer Wasserkasten 1' angeordnet. Dieser innere Wasserkasten 1' weist eine Innenwandung 10 auf, welche einen Innenraum 11 des inneren Wasserkastens 1' begrenzt. Der Innenraum 11 sowie die Innenwandung 10 sind vom Hohlraum 21 sowie der Aussenwandung 20 des äusseren Wasserkastens 1" umgeben. Der innere Wasserkasten 1' weist eine erste Frischlufteinlassöffnung 12 auf, welche im Bereich zwischen der Motorhaube und der Frontscheibe des Kraftfahrzeugs 4 nach aussen hin mündet und dazu dient, Frischluft von ausserhalb des Kraftfahrzeugs 4 in den Innenraum 11 einströmen zu lassen. Der Innenraum 11 erstreckt sich in eine Lufteinlassleitung 103 hinein, durch welche hindurch die von aussen her durch die erste Frischlufteinlassöffnung 12 hindurch angesogene Frischluft in den Innenraum 11 hineinströmt. Die Lufteinlassleitung 103 ist dabei insbesondere in dem oben angeordneten und eine Deckfläche bildenden Bereich der Innenwandung 10 angeordnet.

Auf der in Bezug auf die Lufteinlassleitung 103 im Wesentlichen gegenüberliegenden Seite der Deckfläche der Innenwandung 10 weist der innere Wasserkasten 1' eine Luftauslassleitung 101 auf, in welche sich der Innenraum 11 hinein erstreckt. Am Ende der Luftauslassleitung 101 ist eine Luftauslassöffnung 15 des inneren Wasserkastens 1' ausgebildet, durch welche hindurch Luft aus dem Innenraum 11 ausströmen kann. Die Luftauslassleitung 101 ist mit einem Klimagerät 3 verbunden, welches ein Luftfördermittel, wie insbesondere einen Ventilator, aufweist, um Frischluft durch die erste Frischlufteinlassöffnung 12 in den Innenraum 11 des inneren Wasserkastens 1' und von dort durch die Luftauslassöffnung 15 hindurch anzusaugen und dem Fahrgastraum des Kraftfahrzeugs 4 insbesondere in gekühlter oder erwärmter Form zuzuführen.

Das Klimagerät 3 ist üblicherweise im Inneren des Fahrgastraums des Kraftfahrzeugs 4 angeordnet, während sich der Wasserkasten 1 grösstenteils im Motorraum des Kraftfahrzeugs 4 befindet. Die Luftauslassleitung 101 führt somit in der Regel durch eine zwischen dem Motorraum und dem Fahrgastraum des Kraftfahrzeugs 4 vorgesehene Trennwand hindurch.

In dem in Bezug auf die Schwerkraftrichtung zuunterst angeordneten Bereich der Innenwandung 10 ist eine Wasseraustrittsöffnung 16 angeordnet, welche zum Abführen von Wasser aus dem Innenraum 11 nach aussen hin dient. Die Wasseraustrittsöffnung 16 ist dabei von einem sich im Wesentlichen entlang der vertikalen Richtung erstreckenden Austrittsstutzen 161 umgeben, welcher die Aussenwandung 20 des äusseren Wasserkastens 1" durchsetzt. Die Aussenwandung 20 des äusseren Wasserkastens 1" wird zudem auch von der Lufteinlassleitung 103 sowie von der Luftauslassleitung 101 durchsetzt.

Von der Deckfläche der Innenwandung 10 ragt ein Umlenkelement 17, welches in Luftstromrichtung zwischen der ersten Frischlufteinlassöffnung 12 und der Luftauslassöffnung 15 angeordnet ist, weit in den Innenraum 11 hinein. Da das Umlenkelement 17 von der durch die erste Frischlufteinlassöffnung 12 einströmenden Frischluft vertikal und bevorzugt auch horizontal umströmt werden muss, begünstigt es das Abscheiden von Wasser aus der Frischluft.

Das Umlenkelement 17 unterteilt den Innenraum 11 in Bezug auf die Luftströmung in einen luftstromaufwärts angeordneten Innenraumteilbereich 111 und einen luftstromabwärts angeordneten Teilbereich 112. Aufgrund der Anwesenheit des Umlenkelements 17, welches eine druckverlustbehaftete Struktur bildet, erfährt die den Innenraum 11 durchströmende Frischluft im stromaufwärts angeordneten Innenraumteilbereich 111 einen wesentlich grösseren Druckabfall als im stromabwärts angeordneten Innenraumteilbereich 112. Einen zusätzlichen Druckabfall kann die den Innenraum 11 durchströmende Frischluft erfahren aufgrund von allfällig an der Innenseite 102 der Innenwandung 10 vorhandener Oberflächenstrukturen, Unebenheiten, rauh ausgebildeten Oberflächen oder Beschichtungen etc. Der Druckabfall im inneren Wasserkasten 1' kann dabei aufgrund des Strömungswiderstands der im Innenraum 11 vorhandenen druckverlustbehafteten Strukturen insbesondere dann kritisch werden, wenn das im Klimagerät 3 vorgesehene Luftfördermittel auf einer hohen Stufe betrieben wird und entsprechend eine verhältnismässig grosse Menge von Frischluft durch die erste Frischlufteinlassöffnung 12 angesogen wird.

Für den Fall, dass der Druckabfall im inneren Wasserkasten 1' gross wird, ist innerhalb der Innenwandung 10 angrenzend an den stromabwärts angeordneten Innenraumteilbereich 112 eine zweite Frischlufteinlassöffnung 13 vorgesehen, welche bei Bedarf von einer Klappe 14 teilweise oder ganz freigegeben bzw. verschlossen werden kann. Die zweite Frischlufteinlassöffnung 13 verbindet den Innenraum 11 des inneren Wasserkasten 1' mit dem Hohlraum 21 des äusseren Wasserkastens 1". Vorteilhaft ist die zweite Frischlufteinlassöffnung 13 in der Nähe (wie es in der Figur 1 gezeigt ist) oder sogar innerhalb der Luftauslassleitung 101 angeordnet, so dass die durch die zweite Frischlufteinlassöffnung 13 hindurchtretende Frischluft vom Strömungswiderstand der im Innenraum 11 vorhandenen druckverlustbehafteten Struktur kaum oder gar nicht beeinflusst wird.

Im Normalbetrieb, wenn das Klimagerät 3 eine verhältnismässig eher kleine Luftmenge durch die erste Frischlufteinlassöffnung 12 hindurch ansaugt, ist der Druckabfall aufgrund der im Innenraum 11 des inneren Wasserkastens 1' vorhandenen druckverlustbehafteten Struktur (insbesondere des Umlenkelements 17) verhältnismässig gering, sodass die zweite Frischlufteinlassöffnung 13 mittels der Klappe 14 verschlossen werden kann. Wenn das Luftfördermittel des Klimageräts 3 jedoch bspw. aufgrund von beschlagenen Scheiben des Kraftfahrzeugs 4 oder aufgrund einer zu hohen bzw. zu tiefen im Fahrgastraum vorliegenden Temperatur mit einer erhöhten Förderleistung betrieben wird, kann der Druckabfall in Bezug auf die den inneren Wasserkasten 1' durchströmende Frischluft sehr gross werden. Der Druckabfall entsteht dabei insbesondere aufgrund des Strömungswiderstands des Umlenkelements 17 sowie der verhältnismässig kleinen Dimensionierung des inneren Wasserkastens 1' und den damit verbundenen Reibungsverlusten an der Innenseite 102 der Innenwandung 10. Der Druck der durch die Luftauslassöffnung 15 in das Klimagerät 3 und von diesem in den Fahrgastraum einströmenden Luft ist dann trotz der verhältnismässig hohen Förderleistung des Luftfördermittels des Klimageräts 3 klein bzw. der Energieverbrauch des Luftfördermittels hoch. In diesem Fall kann mittels Öffnen der Klappe 14 die zweite Frischlufteinlassöffnung 13 teilweise oder ganz freigegeben werden, sodass Frischluft zusätzlich durch die Lufteintrittsöffnungen 22 und den Hohlraum 21 des äusseren Wasserkatsens 1" angesogen werden kann.

Die Steuerung der Klappe 14 erfolgt üblicherweise mittels einer in den Zeichnungen nicht dargestellten Steuereinrichtung, welche gemeinsam mit der Klappe 14 eine Regelungsvorrichtung bildet zum Regeln der durch die zweite Frischlufteinlassöffnung 13 in den Innenraum 11 einströmenden Frischluftmenge. Teil dieser Steuereinrichtung kann insbesondere ein vom Fahrer oder von der automatischen Klimasteuerung des Kraftfahrzeugs 4 beinflussbarer Regler sein, mittels welchem die Förderleistung des im Klimagerät 3 vorhandenen Luftfördermittels eingestellt wird. Die Steuereinrichtung stellt den Öffnungszustand der Klappe 14 vorteilhaft in Abhängigkeit der aktuellen Förderleistung des Klimageräts 3 ein. Sie kann dabei die Klappe 14 insbesondere bei Überschreiten einer bestimmten Förderleistung vollständig öffnen bzw. bei Unterschreiten dieser Förderleistung vollständig verschliessen. Auf diese Weise ist es möglich, einen zum Beispiel in Bezug auf die Wasserabscheidung und/oder Wärmeübertragung (siehe nachfolgende Ausführungsbeispiele) optimierten inneren Wasserkasten 1' mit einem verhältnismässig stark druckverlustbehafteten Umströmungsorgan 17 zu verwenden und trotzdem einen ausreichend hohen Druck in Bezug auf die die Luftauslassöffnung 15 durchströmende Luft auch bei verhältnismässig hohen Förderleistungen des Luftfördermittels zu gewährleisten.

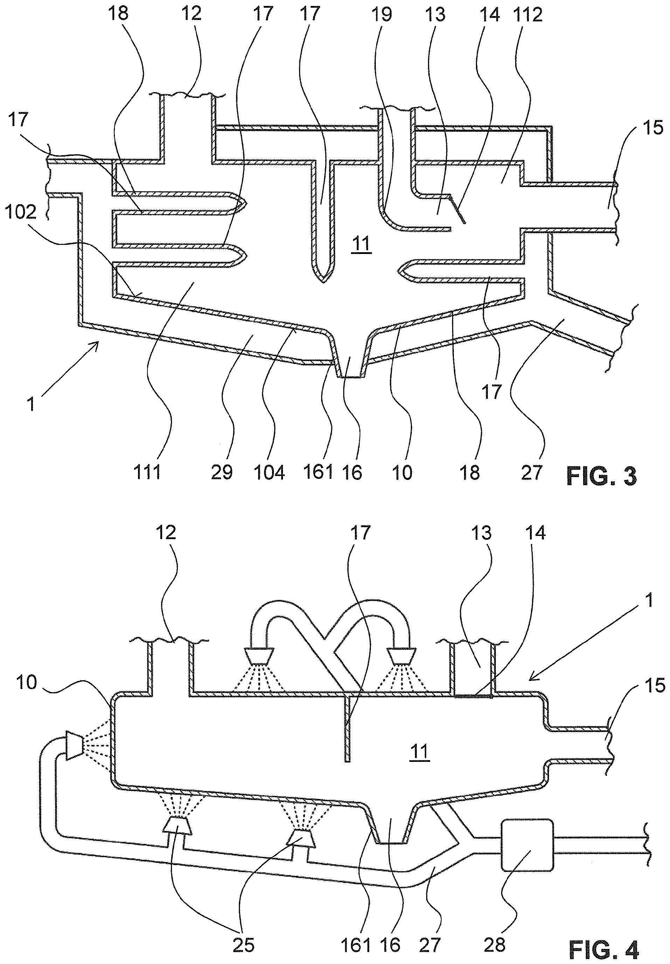

In den Figuren 2 und 3 ist eine zweite bzw. dritte Ausführungsform eines Wasserkastens 1 für ein Kraftfahrzeug gezeigt. Das Kraftfahrzeug ist in diesen Figuren aus darstellerischen Gründen jeweils nicht gezeichnet. Die in den Figuren 2 und 3 gezeigten Wasserkästen 1 weisen jeweils eine Innenwandung 10 auf, welche einen Innenraum 11 begrenzt. In den Innenraum 11 mündet zumindest eine erste Frischlufteinlassöffnung 12 sowie zumindest eine Luftauslassöffnung 15, sodass Frischluft von der ersten Frischlufteinlassöffnung 12 in den Innenraum 11 hinein und von dort durch die Luftauslassöffnung 15 nach aussen gelangen kann.

Die in den Figuren 2 und 3 gezeigten Wasserkästen sind insbesondere jeweils als Wärmetauscher ausgebildet und sind zu einem Grossteil doppelwandig mit einem den Innenraum 11 zumindest teilweise umgebenden Zwischenraum 29 ausgebildet, sodass die Innenwandung 10 zur Vortemperierung der durch den Innenraum 11 hindurchströmenden Frischluft von Abluft umströmt werden kann. Die Innenwandung 10 bildet somit in denjenigen Bereichen, welche den Zwischenraum 29 begrenzen, ein Wärmetauschelement 18. Eine Zuführleitung 27 ist vorgesehen, um Abluft beispielsweise aus dem Fahrgastinnenraum oder dem Motorenraum in den Zwischenraum 29 zu leiten. Die Zuführleitung 27 sowie die äussere, den Zwischenraum 29 begrenzende Wandung bilden somit eine Leitstruktur, mittels welcher Abluft gezielt zur Innenwandung 10 hin geleitet wird. Beim Umströmen der Aussenseite 104 der Innenwandung 10 überträgt die Abluft Wärmeenergie auf die Innenwandung 10 und von dieser auf die den Innenraum 11 durchströmende Frischluft. Die Innenwandung 10 ist hierzu vorteilhaft aus einen gut wärmeleitenden Material, wie insbesondere einem Metall oder einem Kunststoff mit ausreichend guter Wärmeleitfähigkeit, hergestellt. Um einerseits Wasser aus der Frischluft möglichst effizient abzuscheiden, und andererseits die Übertragung der Wärmeenergie von Abluft auf die Frischluft zu verbessern, ist bei den in den Figuren 2 und 3 gezeigten Ausführungsformen an der Innenseite 102 der Innenwandung 10 jeweils eine Vielzahl von weit in den Innenraum 11 hineinragenden Umströmungsorganen angebracht, welche jeweils hohl ausgebildet sind, um von Abluft durchströmt werden zu können.

An einem in Bezug auf die Schwerkraftrichtung möglichst weit unten angeordneten Punkt des Innenraums 11 ist auch bei diesen Ausführungsformen innerhalb der Innenwandung 10 jeweils eine Wasseraustrittsöffnung 16 ausgebildet, durch welche im Innenraum 11 von der Frischluft abgeschiedenes Wasser nach aussen gelangen kann. Die Wasseraustrittsöffnung 16 ist seitlich von einem Wasseraustrittsstutzen 161 umgeben, welcher durch die äussere, den Zwischenraum 29 begrenzende Wandung hindurchragt.

Die grosse Anzahl von Umströmungsorganen 17, welche weit in den Innenraum 11 hineinragen, bewirkt in Bezug auf die den Innenraum 11 durchströmende Frischluft einen verhältnismässig grossen Druckabfall. Um insbesondere bei grossen angesogenen Frischluftmengen einen genügend grossen Luftdruck im Bereich der Luftauslassöffnung 15 zu gewährleisten, weisen die in den Figuren 2 und 3 gezeigten Wasserkästen 1 jeweils eine zweite Frischlufteinlassöffnung 13 auf, die mit einer Klappe 14 verschlossen bzw. freigegeben werden kann. Bei der Ausführungsform gemäss der Figur 2 ist diese zweite Frischlufteinlassöffnung 13 innerhalb einer Luftauslassleitung 101 angeordnet. Bei der in der Figur 3 gezeigten Ausführungsform ist die zweite Frischlufteinlassöffnung 13 am Ende eines in den Innenraum 11 hineinragenden Frischlufteinlassstutzens 19 vorgesehen, welcher via eine Biegung derart zur Luftauslassöffnung 15 hin gerichtet ist, dass die Frischluft beim Einströmen in den Innenraum 11 direkt in Richtung zur Luftauslassöffnung 15 hin durch die zweite Frischlufteinlassöffnung 13 strömt. Sowohl bei der Ausführungsform gemäss Figur 2 als auch bei der Ausführungsform gemäss Figur 3 wird die durch die zweite Frischlufteinlassöffnung 13 in den Innenraum 11 einströmende Frischluft vom Strömungswiderstand der Vielzahl der in den Innenraum 11 hineinragenden Umstimmungsorganen 17 kaum bzw. gar nicht beeinflusst.

Der in der Figur 4 gezeigte Wasserkasten 1 für ein Kraftfahrzeug gemäss einer vierten Ausführungsform weist ebenfalls eine erste Frischlufteinlassöffnung 12, eine Luftauslassöffnung 15 sowie eine Wasseraustrittsöffnung 16 auf, welche via einen von einer Innenwandung 10 begrenzten Innenraum 11 miteinander verbunden sind. In den Innenraum 11 ragt von oben her ein Umlenkelement 17 hinein, welches zum Abscheiden von Wasser aus der den Innenraum 11 durchströmenden Frischluft dient. Ein Grossteil der Innenwandung 10 bildet ein Wärmetauschelement, und es sind Zuführleitungen 27 vorhanden, um eine Kühlflüssigkeit, wie insbesondere im Klimagerät 3 anfallendes Kondenswasser, via Sprühdüsen 25 auf die Aussenseite der Innenwandung 10 aufzutragen. Mittels Wärmeübertragung kann dadurch die den Innenraum 11 durchströmende Frischluft vorgekühlt werden. Ein Reservoir 28 ist vorgesehen, in welchem die Kühlflüssigkeit gesammelt und/oder gespeichert ist. Auch bei dieser Ausführungsform ist innerhalb der Innenwandung 10 eine mit einer Klappe 14 je nach Bedarf verschliessbare zweite Frischlufteinlassöffnung 13 vorgesehen. Die zweite Frischlufteinlassöffnung 13 ist in Luftstromrichtung zwischen einem Umlenkelement 17, welches von oben her von der Innenwandung 10 in den Innenraum 11 hineinragt, und der Luftauslassöffnung 15 angeordnet.

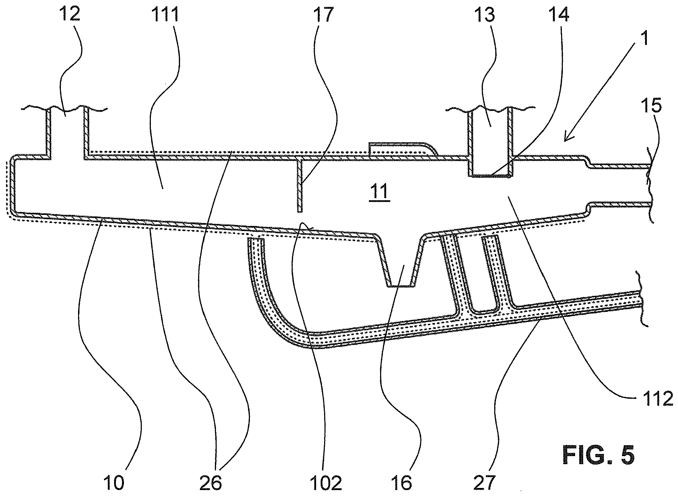

In der Figur 5 ist eine weitere Ausführungsform dargestellt, bei welcher die Kühlung des Wasserkastens 1 mittels Aufbringen einer Kühlflüssigkeit auf die Aussenseite der Innenwandung 10 erreicht wird. Im Vergleich zu der in der Figur 4 dargestellten Ausführungsform unterscheidet sich die Ausführungsform der Figur 5 jedoch dadurch, dass die Kühlflüssigkeit mit Hilfe des Kapillareffektes, der durch ein auf der Aussenseite der Innenwandung 10 sowie im Innern der Zuführleitungen 27 vorgesehenen Vlieses 26 hervorgerufen wird, auf die Aussenseite des Wasserkastens 1 aufgebracht wird.

Um die Kühlwirkung der Kühlflüssigkeit zu verstärken, ist der Wasserkasten 1 der Ausführungsform der Figur 5 derart ausgestaltet, dass die als Wärmetauschelement fungierende Wandung, in diesem Fall ein Grossteil der Innenwandung 10, im Verhältnis zum Volumen des Innenraums 11 eine möglichst grosse Fläche bildet. Der Wasserkasten 1 weist entsprechend insgesamt eine sehr flache Form auf, mit einem Innenraum 11, der in die horizontale Richtung um ein Vielfaches grösser dimensioniert ist, als in die vertikale Richtung. Aufgrund dieser besonderen Form und der grossen Oberfläche der Innenwandung 10 in Bezug auf das Volumen des Innenraums 11 entsteht jedoch aufgrund von Reibungseffekten des Luftstroms an der Innenseite 102 der Innenwandung 10 ein verhältnismässig hoher Druckverlust. Indem eine mit einer Klappe 14 beliebig verschliessbare zweite Frischlufteinlassöffnung 13 in der Nähe der Luftauslassöffnung 15 vorgesehen wird, kann jedoch, ähnlich wie bereits im Zusammenhang mit den vorangegangenen Ausführungsbeispielen beschrieben, ein ausreichender Luftdruck im Bereich der Luftauslassöffnung 15 auch dann noch gewährleistet werden, wenn vom Klimagerät 3 verhältnismässig grosse Mengen von Frischluft durch die erste Frischlufteinlassöffnung 12 hindurch angesogen werden.

Die vorstehende Erfindung ist selbstverständlich nicht auf die beschriebenen Ausführungsformen beschränkt, und eine Vielzahl von Abwandlungen ist möglich. So kann beispielsweise der in der Figur 1 gezeigte äussere Wasserkasten 1" auch als offener Wasserkasten ausgebildet sein, bei welchem der Hohlraum 21 nicht im Wesentlichen vollständig, sondern nur bereichsweise von einer Aussenwandung 20 begrenzt ist. Der äussere Wasserkasten 1" könnte bei dem in der Figur 1 gezeigten Ausführungsbeispiel auch ganz entfallen, und die zweite Frischlufteinlassöffnung 13 z.B. via eine entsprechend vorgesehene Lufteinlassleitung direkt nach aussen hin münden. Die Steuereinrichtung zum Regeln des Öffnungszustandes der Klappe 14 könnte beispielsweise auch eine Rechnereinheit sowie eine mit dieser verbundene Messeinheit umfassen, welche einen Luftdruck und/oder eine Luftmenge misst, die im Bereich der Luftauslassöffnung 15 oder luftstromabwärts von dieser vorliegt. Um die Wasserabscheidung in Bezug auf die angesogene Frischluft zu verbessern, und/oder um eine effizientere Wärmeübertragung auf die den Innenraum 11 durchströmende Frischluft von der Aussenseite des Wasserkastens zu erreichen, könnte die Innenseite 102 der Innenwandung 10 beliebig ausgestaltete Oberflächenstrukturen aufweisen, wie insbesondere rillenförmige, rippenförmige, reliefartige oder wellenartige Strukturen. Dies würde den Druckverlust im Wasserkasten weiter erhöhen, was jedoch bei Erreichen von kritischen Druckverlusten mittels Öffnen der Klappe 14 umgangen werden kann. Eine Vielzahl weiterer Abwandlungen ist möglich.

**BEZUGSZEICHENLISTE**

| | | | |
|---|---|---|---|
| 1 | Wasserkasten | 15 | Luftauslassöffnung |
| 1' | Innerer Wasserkasten | 16 | Wasseraustrittsöffnung |
| 1" | Äusserer Wasserkasten | 161 | Wasseraustrittsstutzen |
| | | 17 | Umlenkelement |
| 10 | Innenwandung | 18 | Wärmetauschelement |
| 101 | Luftauslassleitung | 19 | Frischlufteinlassstutzen |
| 102 | Innenseite | | |
| 103 | Lufteinlassleitung | 20 | Aussenwandung |
| 104 | Aussenseite | 21 | Hohlraum |
| | | 22 | Lufteintrittsöffnung |
| 11 | Innenraum | 23 | Wasseraustrittsöffnung |
| 111 | Stromaufwärts angeordneter Innenraumteilbereich | 24 | Umlenkelement |
| 112 | Stromabwärts angeordneter | 25 | Sprühdüsen |
| | Innenraumteilbereich | 26 | Vlies |
| | | 27 | Zuführleitung |
| 12 | Erste | 28 | Reservoir |
| | Frischlufteinlassöffnung | 29 | Zwischenraum |
| 13 | Zweite Frischlufteinlassöffnung | | |
| | | 3 | Klimagerät |
| 14 | Klappe | 4 | Kraftfahrzeug |

## Patentansprüche

1. Vorrichtung zum Abscheiden von Wasser (1) für ein Kraftfahrzeug (4), mit einem ersten Wasserkasten aufweisend
eine Innenwandung (10), welche einen Innenraum (11) begrenzt,
zumindest eine erste Frischlufteinlassöffnung (12), um Frischluft in den Innenraum (11) einströmen zu lassen,
zumindest eine Luftauslassöffnung (15), um Luft aus dem Innenraum (11) ausströmen zu lassen,
zumindest eine erste Wasseraustrittsöffnung (16), welche zum Abführen von Wasser aus dem Innenraum (11) dient,
wenigstens eine im Innenraum (11) angeordnete druckverlustbehaftete Struktur (17, 18), welches einen Druckverlust zwischen der ersten Frischlufteinlassöffnung (12) und der Luftauslassöffnung (15) in Bezug auf die den Innenraum (11) hindurchströmenden Luft bewirkt, sowie
zumindest eine zweite Frischlufteinlassöffnung (13), um Frischluft in den Innenraum (11) einströmen zu lassen, wobei die zweite Frischlufteinlassöffnung (13) derart luftstromabwärts von der wenigstens einen druckverlustbehafteten Struktur (17, 18) angeordnet ist, dass die Luft beim Einströmen in den Innenraum (11) durch die zweite Frischlufteinlassöffnung (13) hindurch im Wesentlichen in Richtung zur Luftauslassöffnung (15) hin strömt,
**dadurch gekennzeichnet, dass**
die Vorrichtung zum Abscheiden von Wasser (1) zudem einen im Vergleich zum ersten Wasserkasten grösseren zweiten Wasserkasten aufweist, in dessen Inneren der erste Wasserkasten angeordnet ist, der zweite Wasserkasten aufweisend
eine Aussenwandung (20), welche einen Hohlraum (21) begrenzt, wobei die Aussenwandung (20) und der Hohlraum (21) die Innenwandung (10) und den Innenraum (11) des ersten Wasserkastens umgeben,
zumindest eine in der Aussenwandung (20) angeordnete Lufteintrittsöffnung (22), durch welche hindurch Luft in den Hohlraum (21) einströmen kann,
zumindest ein im Hohlraum (21) angeordnetes Umlenkelement (24), welches zum Abscheiden von Wasser aus der den Hohlraum (21) durchströmenden Luft dient, sowie
zumindest eine zweite Wasseraustrittsöffnung (23), welche zum Abführen von Wasser aus dem Hohlraum (21) ausgebildet ist,
und dass die zweite Frischlufteinlassöffnung (13) den Innenraum (11) des ersten Wasserkastens und den Hohlraum (21) des zweiten Wasserkastens derart miteinander verbindet, dass durch die zweite Frischlufteinlassöffnung (13) hindurch Luft aus dem Hohlraum (21) in den Innenraum (11) strömen kann.

2. Kraftfahrzeug (4) mit einem Fahrgastinnenraum sowie mit einer Vorrichtung zum Abscheiden von Wasser (1), gemäss Anspruch 1.

3. Kraftfahrzeug (4) nach Anspruch 2, wobei das Kraftfahrzeug (4) eine Regelungsvorrichtung (14) zum Regeln der durch die zweite Frischlufteinlassöffnung (13) in den Innenraum (11) einströmenden Frischluftmenge aufweist.

4. Kraftfahrzeug (4) nach Anspruch 3, wobei das Kraftfahrzeug (4) ein Klimagerät (3) mit zumindest einem Luftfördermittel aufweist, mittels welchem Luft aus dem Innenraum (11) durch die Luftauslassöffnung (15) hindurch ansaugbar ist, und wobei die Regelungsvorrichtung (14) derart konfiguriert ist, dass die durch die zweite Frischlufteinlassöffnung (13) in den Innenraum (11) einströmende Luftmenge in Abhängigkeit der aktuellen Förderleistung des Luftfördermittels geregelt wird.

5. Kraftfahrzeug (4) nach einem der Ansprüche 3 oder 4, wobei die Regelungsvorrichtung eine Klappe (14) umfasst.

6. Kraftfahrzeug (4) nach einem der Ansprüche 2 bis 5, wobei sich der Innenraum (11) von der ersten Frischlufteinlassöffnung (12) bis zur Luftauslassöffnung (15) erstreckt und derart in einen ersten Teilbereich (111) und einen zweiten Teilbereich (112) unterteilt ist, dass der erste Teilbereich (111) in Bezug auf die von der ersten Frischlufteinlassöffnung (12) durch den Innenraum (11) hindurch zur Luftauslassöffnung (15) strömende Luft einen grösseren Druckverlust bewirkt als der zweite Teilbereich (112) und relativ zum zweiten Teilbereich (112) luftstromaufwärts angeordnet ist, und wobei die zweite Frischlufteinlassöffnung (13) in einem den zweiten Teilbereich (112) begrenzenden Bereich der Innenwandung (10) angeordnet ist.

7. Kraftfahrzeug (4) nach einem der Ansprüche 2 bis 6, wobei die druckverlustbehaftete Struktur als ein Umlenkelement (17, 18) ausgebildet ist, welches zum Abscheiden von Wasser aus der den Innenraum (11) durchströmenden Luft dient.

8. Kraftfahrzeug (4) nach einem der Ansprüche 2 bis 7, wobei die druckverlustbehaftete Struktur als ein Wärmetauschelement (18) ausgebildet ist, welches dazu dient, thermische Energie von Abluft in den Innenraum (11) zu übertragen, und wobei das Kraftfahrzeug (4) zumindest eine Leitstruktur (25, 26, 27) aufweist, welche dazu dient, Abluft gezielt zum Wärmetauschelement (18) hin zu leiten.

9. Kraftfahrzeug (4) nach einem der Ansprüche 2 bis 8, wobei der erste Wasserkasten (1) eine Vielzahl von in den Innenraum (11) hineinragenden Umströmungsorganen (17, 18) aufweist, welche an der den Innenraum (11) begrenzenden Innenwandung (10) angebracht sind, und wobei diese Umströmungsorgane (17, 18) insbesondere jeweils hohl ausgebildet sind, um von Abluft durchströmt zu werden.

10. Kraftfahrzeug (4) nach einem der Ansprüche 2 bis 9, wobei die den Innenraum (11) begrenzende Innenwandung (10) eine zum Innenraum (11) hin gewandte Innenseite (102) mit einer Oberflächenstruktur aufweist, welche im Vergleich zu einer glatten Oberfläche eine erhebliche Oberflächenvergrösserung, insbesondere zumindest eine Verdoppelung der Oberfläche, bewirkt.

11. Kraftfahrzeug (4) nach einem der Ansprüche 2 bis 10, wobei der erste Wasserkasten (1) eine Luftauslassleitung (101) mitumfasst, welche in die Luftauslassöffnung (15) mündet, und wobei die zweite Frischlufteinlassöffnung (13) innerhalb dieser Luftauslassleitung (101) angeordnet ist.

12. Verfahren zur Regelung eines Luftdrucks und/oder einer Luftmenge an einer Luftauslassöffnung (15) einer Vorrichtung zum Abscheiden von Wasser (1) eines nach einem der Ansprüche 2 bis 11 ausgebildeten Kraftfahrzeugs (4), wobei die Vorrichtung zum Abscheiden von Wasser (1) einen ersten, kleineren Wasserkasten aufweist, welcher im Inneren eines zweiten, grösseren Wasserkastens angeordnet ist, und welcher eine erste Frischlufteinlassöffnung (12), eine zweite Frischlufteinlassöffnung (13), welche einen Innenraum (11) des ersten Wasserkastens und einen Hohlraum (21) des zweiten Wasserkastens miteinander verbindet, sowie eine Luftauslassöffnung (15) aufweist, welche via den Innenraum (11) des ersten Wasserkastens miteinander verbunden sind, und wobei das Verfahren zumindest den Schritt aufweist, dass die durch die zweite Frischlufteinlassöffnung (13) in den Innenraum (11) des ersten Wasserkastens einströmende Luftmenge mittels einer Regelungsvorrichtung (14) in Abhängigkeit eines Luftdrucks und/oder einer Luftmenge geregelt wird, welcher/welche luftstromabwärts zur Luftauslassöffnung (15) und/oder im Bereich der Luftauslassöffnung (15) vorliegt.

## Claims

1. Device for separating water (1) for a motor vehicle (4), with a first water box comprising
an inner wall (10) which delimits an inner space (11),
at least one first fresh air inlet opening (12), in order to let fresh air stream into the inner space (11),
at least one air outlet opening (15), in order to let air stream out of the inner space (11),
at least one first water exit opening (16), which serves to discharge water from the inner space (11),
at least one pressure lossy structure (17,18) arranged in the inner space (11), which effects a pressure loss between the first fresh air inlet opening (12) and the air outlet opening (15) with respect to the air streaming through the inner space (11), and
at least one second fresh air inlet opening (13), in order to let fresh air stream into the inner space (11), wherein the second fresh air inlet opening (13) is arranged such air-downstream of the at least one pressure lossy structure (17, 18) that the air, when streaming into the inner space (11), streams through the second fresh air inlet opening (13) essentially in the direction towards the air outlet opening (15),
**characterized in that**
the device for separating water (1) additionally comprises a second water box which is larger as compared to the first water box, and in the interior of which the first water box is arranged, the second water box comprising
an outer wall (20) which delimits a hollow space (21), wherein the outer wall (20) and the hollow space (21) surround the inner wall (10) and the inner space (11) of the first water box,
at least one air entry opening (22) which is arranged in the outer wall (20) and through which air can stream into the hollow space (21),
at least one deflection element (24) which is arranged in the hollow space (21) and which serves to separate water from the air streaming through the hollow space (21), and
at least one second water exit opening (23) which is adapted to discharge water from the hollow space (21),
and that the second fresh air inlet opening (13) connects the inner space (11) of the first water box and the hollow space (21) of the second water box such with each other, that air can stream from the hollow space (21) through the second fresh air inlet opening (13) into the inner space (11).

2. Motor vehicle (4) with a passenger inner space and with a device for separating water (1), according to claim 1.

3. Motor vehicle (4) according to claim 2, wherein the motor vehicle (4) comprises a control device (14) for controlling the amount of fresh air that streams through the second fresh air inlet opening (13) into the inner space (11).

4. Motor vehicle (4) according to claim 3, wherein the motor vehicle (4) comprises an air conditioner (3) with at least one air conveying means, by means of which air can be aspirated from the inner space (11) through the air outlet opening (15), and wherein the control device (14) is configured such, that the amount of air that streams through the second fresh air inlet opening (13) into the inner space (11) is controlled in dependence on the actual conveyor rate of the conveying means.

5. Motor vehicle (4) according to one of claims 3 or 4, wherein the control device includes a flap (14).

6. Motor vehicle (4) according to one of claims 2 to 5, wherein the inner space (11) extends from the first fresh air inlet opening (12) as far as to the air outlet opening (15) and is divided such into a first partial area (111) and a second partial area (112), that the first partial area (111) effects a larger pressure loss with respect to the air streaming from the first fresh air inlet opening (12) through the inner space (11) to the air outlet opening (15) than the second partial area (112), and is arranged air-upstream in relation to the second partial area (112), and wherein the second fresh air inlet opening (13) is arranged in an area of the inner wall (10) that delimits the second partial area (112).

7. Motor vehicle (4) according to one of claims 2 to 6, wherein the pressure lossy structure is designed as a deflection element (17, 18), which serves to separate water from the air streaming through the inner space (11).

8. Motor vehicle (4) according to one of claims 2 to 7, wherein the pressure lossy structure is designed as a heat exchanging element (18), which serves to transfer thermal energy of exhaust air into the inner space (11), and wherein the motor vehicle (4) comprises at least one guiding structure (25, 26, 27), which serves to guide exhaust air to the heat exchanging element (18) in a targeted manner.

9. Motor vehicle (4) according to one of claims 2 to 8, wherein the first water box (1) comprises a plurality of stream around members (17, 18) which protrude into the inner space (11) and which are attached to the inner wall (10) that delimits the inner space (11), and wherein these stream around members (17, 18) are particularly designed so as to be hollow in each case, in order to be streamed through by exhaust air.

10. Motor vehicle (4) according to one of claims 2 to 9, wherein the inner wall (10) delimiting the inner space (11) comprises an inner side (102) which is directed towards the inner space (11) and has a surface structure that effects a substantial surface increase, in particular a duplication of the surface, as compared to an even surface.

11. Motor vehicle (4) according to one of claims 2 to 10, wherein the first water box (1) includes an air outlet line (101) which opens into the air outlet opening (15), and wherein the second fresh air inlet opening (13) is arranged within this air outlet line (101).

12. Method for controlling an air pressure and/or an amount of air on an air outlet opening (15) of a device for separating water (1) of a motor vehicle (4) designed in accordance to one of claims 2 to 11, wherein the device for separating water (1) comprises a first, smaller water box, which is arranged in the interior of a second, larger water box, and which comprises a first fresh air inlet opening (12), a second fresh air inlet opening (13), which connects an inner space (11) of the first water box and a hollow space (21) of the second water box with each other, and an air outlet opening (15), which are connected with each other via the inner space (11) of the first water box, and wherein the method comprises at least the step, that the amount of air that streams through the second fresh air inlet opening (13) into the inner space (11) of the first water box is controlled by means of a control device (14) in dependence on an air pressure and/or on an amount of air, which is present air-downstream of the air outlet opening (15) and/or in the area of the air outlet opening (15).

## Revendications

1. Un dispositif de séparation d'eau (1) pour un véhicule automobile (4), ayant un premier réservoir d'eau (4) présentant
une paroi intérieure (10), laquelle délimite un espace intérieur (11),
au moins une première ouverture d'admission d'air frais (12) pour laisser entrer de l'air frais dans l'espace intérieur (11),
au moins une première ouverture d'émission d'air (15) pour laisser écouler de l'air hors de l'espace intérieur (11),
au moins une première ouverture d'écoulement d'eau (16), laquelle sert à évacuer de l'eau hors de l'espace intérieur (11),
au moins une structure (17, 18) présentant une perte de pression disposée dans l'espace intérieur (11), laquelle entraîne une perte de pression entre la première ouverture d'admission d'air frais (12) et l'ouverture d'émission d'air (15) par rapport à l'air s'écoulant à travers l'espace intérieur (11), ainsi que
au moins une seconde ouverture d'admission d'air frais (13) pour laisser entrer de l'air frais dans l'espace intérieur (11), où la seconde ouverture d'admission d'air frais (13) est disposée de telle manière en aval du flux d'air de la structure (17, 18) présentant une perte de pression que lors de l'entrée dans l'espace intérieur (11) à travers de la seconde ouverture d'admission d'air frais (13), l'air s'écoule essentiellement en direction de l'ouverture d'émission d'air (15),
**caractérisé en ce que**
le dispositif de séparation d'eau (1) présente en outre un second réservoir d'eau plus grand par rapport au premier réservoir d'eau, à l'intérieur duquel le premier réservoir d'eau est disposé, le second réservoir d'eau présentant
une paroi extérieure (20), laquelle délimite une cavité (21), où la paroi latérale (20) et la cavité (21) entourent la paroi intérieure (10) et l'espace intérieur (11) du premier réservoir d'eau,
au moins une ouverture d'entrée d'air (22) disposée dans la paroi extérieure (20), à travers de laquelle de l'air peut entrer dans la cavité (21),
au moins un élément de déviation (24) disposé dans la cavité (21), lequel sert à éliminer l'eau de l'air s'écoulant à travers la cavité (21), ainsi que
au moins une seconde ouverture d'écoulement d'eau (23), laquelle est formée pour l'évacuation d'eau hors de la cavité (21),
et que la seconde ouverture d'admission d'air frais (13) communique l'espace intérieur (11) du premier réservoir d'eau et la cavité (21) du second réservoir d'eau de telle sorte l'un à l'autre que l'air peut s'écouler depuis la cavité (21) vers l'espace intérieur (11) à travers la seconde ouverture d'admission d'air frais (13).

2. Un véhicule automobile (4) ayant un habitacle ainsi qu'un dispositif de séparation d'eau (1) selon la revendication 1.

3. Un véhicule automobile (4) selon la revendication 2, où le véhicule automobile (4) présente un dispositif de réglage (14) pour le réglage de la quantité d'air frais entrant dans l'espace intérieur (11) à travers la seconde ouverture d'admission d'air frais (13).

4. Un véhicule automobile (4) selon la revendication 3, où le véhicule automobile (4) présent une climatisation (3) ayant au moins un moyen de transport d'air, au moyen de laquelle de l'air peut être aspiré hors de l'espace intérieur (11) à travers l'ouverture d'émission d'air (15) et/ou le dispositif de réglage (14) est configuré de telle sorte que la quantité d'air entrant dans l'espace intérieur (11) à travers la seconde ouverture d'admission d'air frais (13) est réglée en fonction de la capacité de transport actuelle du moyen de transport d'air.

5. Un véhicule automobile (4) selon une des revendications 3 ou 4, où le dispositif de réglage comporte un clapet (14).

6. Un véhicule automobile (4) selon une des revendications 2 à 5, où l'espace intérieur (11) s'étend depuis la première ouverture d'admission d'air frais (12) jusqu'à l'ouverture d'émission d'air (15) et est subdivisé de telle sorte en un premier domaine partiel (111) et un second domaine partiel (112), que le premier domaine partiel (111) entraine une perte de pression plus importante par rapport à l'air s'écoulant depuis l'ouverture d'admission d'air frais (12) vers l'ouverture d'émission (15) à travers de l'espace intérieur (11) que le second domaine partiel (112), et est disposé en amont du flux d'air par rapport au second domaine partiel (112), et où la seconde ouverture d'admission d'air frais (13) est disposée dans un domaine de la paroi intérieure (10) délimitant le second domaine partiel (112).

7. Un véhicule automobile (4) selon une des revendications 2 à 6, où la structure présentant une perte de pression est formée en tant qu'élément de déviation (17, 18), lequel sert à la séparation d'eau de l'air s'écoulant à travers l'espace intérieur (11).

8. Un véhicule automobile (4) selon une des revendications 2 à 7, où la structure présentant une perte de pression est formée en tant qu'élément échangeur de chaleur (18), lequel sert à transmettre l'énergie thermique d'air évacué dans l'espace intérieur (11), et où le véhicule automobile (4) présente au moins une structure de guidage (25, 26, 27) laquelle qui sert à guider l'air évacué de manière ciblée vers l'élément échangeur de chaleur (18).

9. Le véhicule automobile (4) selon une des revendications 2 à 8, où le premier réservoir d'eau (1) présente une pluralité d'organes contournés par l'écoulement (17, 18) faisant saillie dans l'espace intérieur (11), lesquels sont disposés au niveau de la paroi intérieure (10) délimitant l'espace intérieur (11), et où ces organes (17, 18) sont particulièrement formés de manière respectivement creuse, afin d'être parcourus par l'air évacué.

10. Le véhicule automobile (4) selon une des revendications 2 à 9, où la paroi intérieure (10) délimitant l'espace intérieur (11) présente un côté intérieur (102) ayant une structure de surface dirigée vers l'espace intérieur (11), laquelle entraine une augmentation significative de surface, en particulier au moins un dédoublement de la surface, en comparaison à une surface lisse.

11. Un véhicule automobile (4) selon une des revendications 2 à 10, où le premièr réservoir d'eau (1) comprend une conduite de sortie d'air (101) laquelle débouche dans l'ouverture d'émission d'air (15), et où la seconde ouverture d'admission d'air frais (13) est disposée à l'intérieur de cette conduite de sortie d'air (101)

12. Un procédé pour la réglage de la pression d'air et / ou d'une quantité d'air au niveau d'une ouverture d'émission d'air (15) d'un dispositif de séparation d'eau (1) d'un véhicule automobile (4) agencé selon une des revendications 2 à 11, où le dispositif de séparation d'eau (1) présente un premier réservoir d'eau plus petit, lequel est disposé à l'intérieur d'un second réservoir d'eau plus grand, et lequel présente une première ouverture d'admission d'air frais (12), une seconde ouverture d'admission d'air frais (13), laquelle met en communication un espace intérieur (11) du premier réservoir d'eau et une cavité (21) du second réservoir d'eau l'un avec l'autre, ainsi qu'une ouverture d'émission d'air (15), lesquelles sont en communication l'une avec l'autre à travers l'espace intérieur (11) du premier réservoir d'eau, et où le procédé comprend au moins l'étape dans laquelle la quantité d'air entrant dans l'espace intérieur (11) du premier réservoir d'eau à travers la seconde ouverture d'admission d'air frais (13) est réglée au moyen d'un dispositif de réglage (14) en fonction d'une pression d'air et / ou d'une quantité d'air, laquelle / lesquelles existe/ent en aval du flux d'air de l'ouverture d'émission d'air (15) et / ou dans la domaine de l'ouverture d'émission d'air (15).
